(19) Europäisches Patentamt
European Patent Office
Office européen des brevets

(11) **EP 3 233 627 B1**

(12) **FASCICULE DE BREVET EUROPEEN**

(45) Date de publication et mention
de la délivrance du brevet:
**17.10.2018 Bulletin 2018/42**

(21) Numéro de dépôt: **15830811.4**

(22) Date de dépôt: **17.12.2015**

(51) Int Cl.:
**B64C 11/18** *(2006.01)*        **B64C 11/48** *(2006.01)*

(86) Numéro de dépôt international:
**PCT/FR2015/053600**

(87) Numéro de publication internationale:
**WO 2016/097635 (23.06.2016 Gazette 2016/25)**

(54) **TURBOMACHINE À HÉLICE MULTI-DIAMÈTRES**

TURBOMASCHINE MIT MEHRFACHDURCHMESSER-PROPELLER

TURBOMACHINE WITH MULTI-DIAMETER PROPELLER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1462652**

(43) Date de publication de la demande:
**25.10.2017 Bulletin 2017/43**

(73) Titulaire: **Safran Aircraft Engines**
**75015 Paris (FR)**

(72) Inventeurs:
• **VION, Laurence, Francine**
**77550 Moissy-Cramayel (FR)**
• **GRUBER, Mathieu, Simon, Paul**
**77550 Moissy-Cramayel (FR)**

(74) Mandataire: **Regimbeau**
**87 rue de Sèze**
**69477 Lyon Cedex 06 (FR)**

(56) Documents cités:
**EP-A1- 0 364 689     WO-A1-2012/010782**
**US-A- 5 620 303      US-A1- 2010 206 982**

**Description**

DOMAINE TECHNIQUE GENERAL

La présente invention concerne des turbomachines de type rotor ouvert contrarotatif.

ETAT DE L'ART

Les moteurs à soufflantes « non carénées » (ou turbopropulseurs de type « Propfan » ou « Open rotor ») sont un type de turbomachine dont la soufflante est fixée en dehors du carter moteur, contrairement aux turboréacteurs classiques (de type « Turbofan ») dans lesquels la soufflante est carénée.

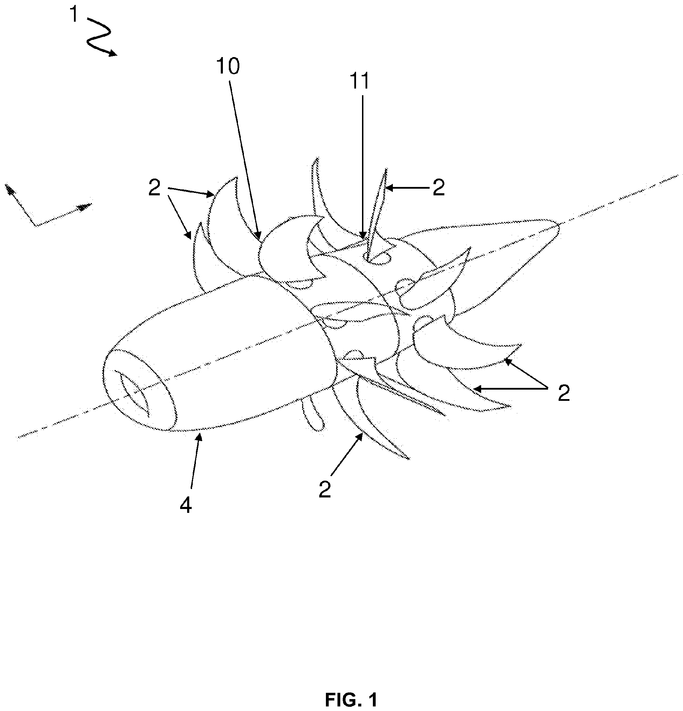

On connait notamment le « Contra-Rotating Open Rotor » (CROR, rotor ouvert contrarotatif), représenté par la **figure 1,** qui est équipé de deux hélices tournant dans des sens opposés. Il présente un grand intérêt de par son rendement propulsif particulièrement élevé.

Le but de ce type de moteur est ainsi de garder la vitesse et les performances d'un turboréacteur en conservant une consommation de carburant similaire à celle d'un turbopropulseur. Le fait que la soufflante ne soit plus carénée permet en effet d'augmenter le diamètre et le débit d'air utile à la poussée.

Toutefois, l'absence de carénage entraîne des problèmes de certification, notamment acoustique. En effet, le bruit généré par les hélices d'open rotor se propage en champ libre. De plus, les sources de bruit sont nombreuses sur ce type d'architecture. Aux points de certification acoustique, il est connu que la principale source de bruit provient des structures tourbillonnaires issues des pales de l'hélice amont et venant impacter les pales de l'hélice aval. Les normes actuelles imposent un seuil maximum de bruit en zones proche sol, c'est-à-dire lors du décollage et de l'approche. Ces normes sont de plus en plus contraignantes avec le temps et il est important d'anticiper cette sévérisation pour que les moteurs les atteignent le jour de leur entrée en service.

Deux approches différentes existent pour réduire ce bruit d'interaction :

- le « clipping » : l'hélice aval est de diamètre inférieur à l'hélice amont de façon à ce que les tourbillons d'extrémité émis par cette dernière passent au-dessus de la première, de sorte à éviter l'impact générateur de bruit. On citera par exemple la demande de brevet US 2010/206982 A1. Cette option nécessite cependant de redessiner les pales de l'hélice aval en allongeant les cordes de façon à assurer une traction suffisante. De plus, le clipping ne permet pas d'éviter l'impact des structures tourbillonnaires quand l'avion est en incidence ;

- modifier la géométrie des pales de l'hélice amont de sorte à réduire l'intensité des structures tourbillonnaires émise par la pale amont, et leur répartition dans le sillage. Cela permet que les fluctuations de charges instationnaires sur l'hélice aval soient de plus faible amplitude. On citera par exemple les demandes de brevet FR2980818 et FR2999151. Cette option s'avère toutefois complexe, et nécessite de diminuer la charge de l'hélice amont et sa traction.

Il serait donc souhaitable de trouver une architecture simple et efficace d'hélice non carénée qui s'affranchisse des limitations précédentes, et permette une amélioration sensible et constante (y compris en incidence) des performances aéro-acoustiques du moteur sans pertes de traction.

PRESENTATION DE L'INVENTION

La présente invention propose selon un premier aspect une turbomachine comprenant au moins deux hélices non carénées dont une hélice amont et une hélice aval, l'hélice amont comprenant une pluralité de pales dont au moins une première pale présentant une longueur différente d'au moins une deuxième pale.

Selon d'autres caractéristiques avantageuses et non limitatives :

- deux pales consécutives de l'hélice amont présentent des longueurs différentes ;
- les pales de l'hélice amont sont divisées en

  $n \in [\![2 \,;+\infty[\!]$ groupes de pales de longueur égale, dont au moins un groupe de premières pales et au moins un groupe de deuxièmes pales ;
- tous les groupes de pales présentent des longueurs de pale différentes ;
- tous les groupes de pales comprennent autant de pales ;
- les pales sont disposées autour de l'hélice amont de sorte que chaque sous-ensemble de $n$ pales consécutives comprenne une pale de chaque groupe ;
- l'hélice amont comprend $2kn, k \in \mathbb{N}^*$, pales,

  deux pales diamétralement opposées sur l'hélice amont appartenant au même groupe ;
- l'hélice amont comprend $(2k+1)n, k \in \mathbb{N}$,

  pales, et au moins un contrepoids disposé de façon diamétralement opposé à une première pale ;
- le nombre $n$ de groupes de pales est deux ou trois ;
- l'hélice aval comprend une pluralité de pales présentant la longueur de la première pale ;
- ladite deuxième pale est une première pale tronquée ;
- ladite deuxième pale est plus courte que la première pale de 0.5% à 5% ;
- les hélices sont contrarotatives ;
- l'hélice aval est fixe.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 précédemment décrite représente un exemple de rotor ouvert contra-rotatif ;
- la figure 2a représente une hélice amont non carénée d'une turbomachine connue ;
- les figures 2b et 2c représentent deux modes de réalisation d'une hélice amont d'une turbomachine selon l'invention ;
- la figure 3 illustre le déplacement des lignes de courant observé dans un mode de réalisation d'une turbomachine selon l'invention.

## DESCRIPTION DETAILLEE

*Open rotor*

En référence à la figure 1, est proposée une turbomachine 1 comprenant au moins deux hélices 10, 11 non-carénées, dont une hélice amont 10 et une hélice aval 11 (selon le sens d'écoulement de fluide). On comprendra que d'autres hélices peuvent être disposées en aval des premières.

Cette turbomachine 1 est préférentiellement de type « open-rotor » (CROR), et comprend ainsi un générateur de gaz 4 (i.e. le « coeur » de la turbomachine, réalisant notamment une combustion du carburant) central par rapport à l'axe d'écoulement des gaz (dans un carter), comprenant une turbine entrainant en rotation les hélices 10, 11, lesquelles sont, dans cet exemple, contrarotatives (i.e. l'hélice amont 10 présente un sens de rotation inverse de l'hélice aval 11). La turbomachine peut aussi bien être un open rotor « pusher » (les hélices 10, 11 sont en aval du générateur de gaz 4, et viennent « pousser » la turbomachine 1) qu'un open rotor « puller » (les hélices 10, 11 sont en amont du générateur de gaz 4, et viennent « tirer » la turbomachine 1).

On note par ailleurs que les hélices 10, 11 ne sont pas forcément contrarotatives et que la deuxième hélice 11 peut d'ailleurs être un stator (i.e. une hélice fixe), la turbomachine 1 étant alors de type dit USF (« Unducted Single Fan »).

Dans tous les cas, chaque hélice 10, 11 présente une pluralité de pales 2 s'étendant sensiblement radialement depuis le carter central. Les hélices 10, 11 définissent autour du carter central une soufflante non-carénée de la turbomachine 1.

*Configuration de pales*

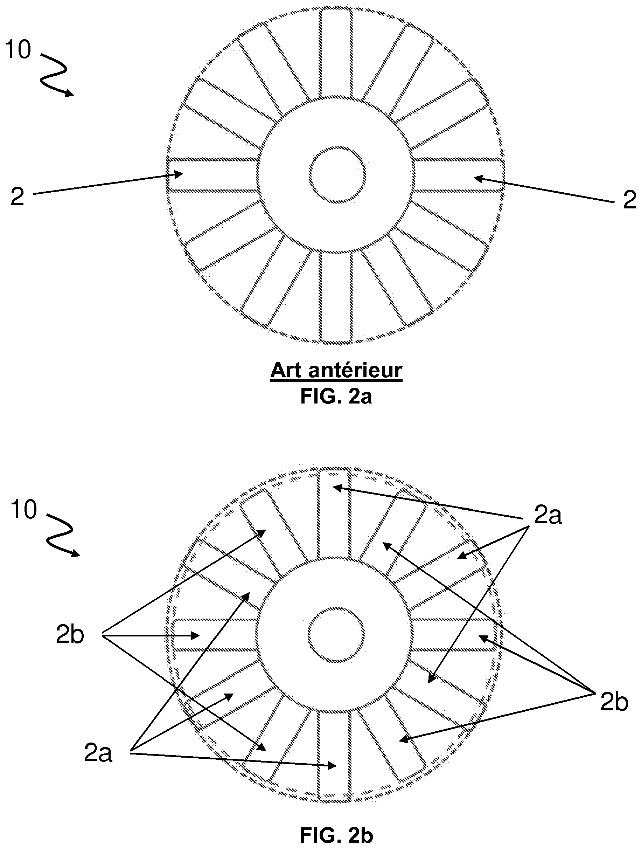

De façon connue, voir **figure 2a,** les pales 2 des hélices 10, 11 sont de même longueur. En d'autres termes, le « rayon » (i.e. la distance à l'axe de rotation de l'hélice 10, 11) de l'extrémité de toutes les pales 2 est constant. Dans la suite de la présente description, on emploiera par commodité le terme de « longueur » de pale, mais on comprendra que par longueur d'une pale 2 on entend le rayon à son extrémité, i.e. la distance entre l'axe de rotation de l'hélice 10, 11 portant la pale 2 (de façon générale l'axe de rotation des hélices 10, 11 car il est commun) et l'extrémité de la pale 2.

La présente turbomachine se distingue en ce qu'au contraire au moins une première pale 2a de l'hélice amont 10 présente une longueur différente d'au moins une deuxième pale 2b, 2c de l'hélice amont 10 (en d'autres termes, l'hélice amont comprend au moins deux pales 2a, 2b, 2c de longueur différentes). Par convention, la première pale 2a est choisie plus longue que la deuxième pale 2b, 2c. On verra plus loin qu'il peut y avoir plusieurs longueurs de deuxième pale 2b, 2c.

Cela permet que les structures tourbillonnaires émises par les pales 2a, 2b, 2c de l'hélice amont 10 impactent les pales 2 de l'hélice aval 11 à des positions radiales différentes.

Chaque tourbillon de bout de pale émis suit en effet la ligne de courant passant par le saumon (i.e. l'extrémité) de la pale 2a, 2b, 2c de l'hélice amont. Cette ligne de courant est contrainte par la contraction de l'écoulement due à l'aspiration des hélices.

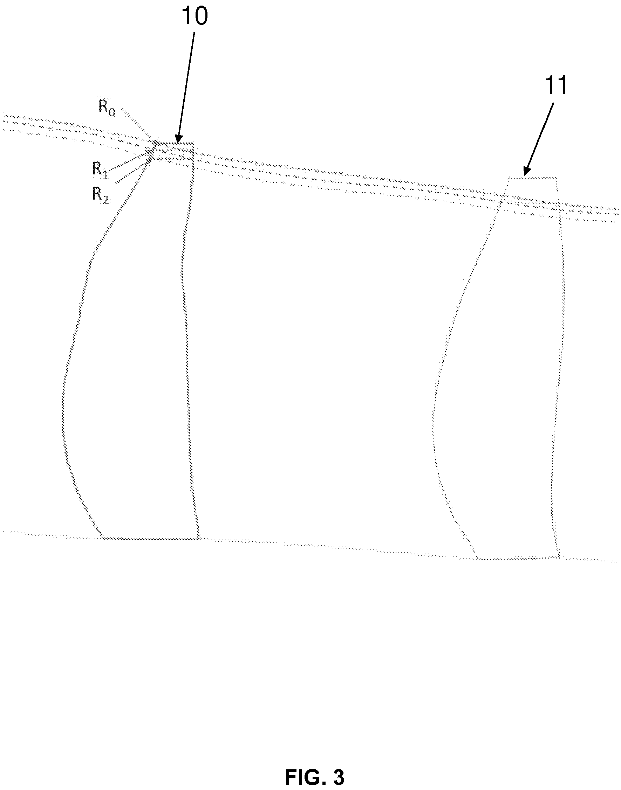

Par conséquent, si une deuxième pale 2b, 2c de l'hélice amont 10 a une longueur réduite, la ligne de courant passant par son saumon est à un rayon inférieur à celle d'une première pale 2a de longueur supérieure. Ainsi, comme le montre la **figure 3,** le tourbillon causé par une deuxième pale 2b, 2c vient impacter l'hélice aval 11 plus bas que celui causé par une première pale 2a. De cette façon, les tourbillons de l'hélice amont 10 associés aux différentes pales 2a, 2b, 2c viennent impacter une même pale 2 de l'hélice aval 11 à des positions radiales différentes (alors que les impacts étaient tous au même endroit pour une hélice amont 10 à pales de longueur uniforme), permettant ainsi un déphasage des sources acoustiques, conduisant à une diminution du niveau acoustique rayonné.

Cette configuration s'applique dans le cas où les tourbillons de l'hélice amont 10 impactent l'hélice aval 11 (entièrement ou partiellement), c'est-à-dire que l'hélice aval 11 est soit non clippée, soit l'est insuffisamment. Dans un mode de réalisation préféré, toutes les pales 2 de l'hélice aval 11 présentent la même longueur, et en particulier la longueur de la première pale 2a de l'hélice amont 10.

De façon préférée, une deuxième pale 2b, 2c est simplement une première pale 2a raccourcie. En d'autres termes le design de la pale n'est pas modifié, seule l'extrémité est tronquée.

Cette modification ne doit pas être trop importante afin de ne pas modifier les performances aérodynamiques des hélices 10, 11, mais doit l'être suffisamment de façon à venir déphaser les sources acoustiques.

Avantageusement, ladite deuxième pale 2b, 2c (en particulier la plus courte des deuxièmes pales 2b, 2c s'il y a plusieurs longueurs) est plus courte que la première pale 2a de 0.5% à 5%.

Un calcul stationnaire axisymétrique a en effet permis de déterminer qu'une diminution du rayon d'une deuxième pale 2b, 2c (par rapport à une première pale 2a) de l'hélice amont 10 de 0.8% (à iso-calage de pale) entraine à altitude de croisière une perte de traction de 0.3% sur cette pale 2b, 2c et une perte négligeable sur une pale 2 de l'hélice aval 11. Le rendement d'une pale de l'hélice amont 10 perd ainsi 0.02 points, et celui d'une pale de l'hélice aval 0.05 points, ce qui est acceptable.

Le même calcul au décollage donne une perte de 1.3% pour la traction sur cette pale 2b, 2c et une perte négligeable sur une pale 2 de l'hélice aval 11. Le rendement d'une pale de l'hélice amont 10 perd ainsi 0.15%, et celui d'une pale de l'hélice aval 11 n'est pas influencé.

Si les pertes de traction sont trop importantes, on peut choisir un calage commun à toutes les pales (d'une même hélice, aval, amont ou les deux) permettant de récupérer la traction.

Une conséquence supplémentaire de la variation des longueurs de pales 2b, 2c sur l'hélice amont 10 est la modification des vitesses de propagation azimutale des tourbillons dans l'écoulement inter-hélice. En effet, la vitesse périphérique *Ui* de l'extrémité d'une deuxième pale 2b, 2c est réduite proportionnellement à la diminution du rayon (*Ui = ΩRi*, où Ω est la vitesse de rotation de l'hélice amont 10 et *Ri* le rayon de la deuxième pale 2b, 2c). Cette modification de vitesse entraine un déphasage temporel des sources acoustiques en plus du déphasage spatial.

La vitesse azimutale du tourbillon marginal s'échappant de la tête de la deuxième pale 2b, 2c est donc également réduite. Pour une variation suffisante des longueurs entre les première et deuxième pales 2a, 2b, 2c, la propagation en azimut des tourbillons entre les hélices 10, 11, et donc l'interaction avec l'hélice aval 11, n'est plus axisymétrique. De la même manière cette modification entraine un déphasage temporel des sources acoustiques.

En plus d'introduire un déphasage supplémentaire entre les sources, il en résulte une modification de la périodicité des interactions et donc de leurs fréquences sur le spectre audible. Sous l'hypothèse que l'énergie acoustique est conservée, les niveaux de bruit peuvent localement (en fréquence) diminuer et la largeur de raie (i.e. pic en fréquence dans le spectre acoustique) s'étaler, voire se scinder en différentes raies d'interactions à fréquences plus faibles

*Groupes de pales*

Selon des modes de réalisation avantageux, les premières et deuxièmes pales 2a, 2b, 2c s'organisent selon certains motifs prédéterminés. En particulier, il est souhaitable que deux pales 2a, 2b, 2c consécutives de l'hélice amont 10 présentent des longueurs différentes, i.e. que les premières pales 2a, soient séparées par des deuxièmes pales 2b, 2c.

Dans cet objectif, les pales 2a, 2b, 2c de l'hélice amont 10 sont avantageusement divisées en

$$n \in [\![2; +\infty[\![ \text{ groupes de pales de longueur égale,}$$

dont au moins un groupe de premières pales 2a et au moins un groupe de deuxièmes pales 2b, 2c. Tous les groupes de pales 2a, 2b, 2c présentent des longueurs de pale 2a, 2b, 2c différentes. Par commodité, on peut considérer que le premier groupe réunit les plus longues pales (les premières pales 2a), et que les *n-1* autres groupes sont des groupes de deuxièmes pales 2b, 2c classées par longueurs décroissantes : le deuxième groupe réunit les plus longues des deuxièmes pales, le nième groupe réunit les plus courtes des deuxièmes pales, etc.

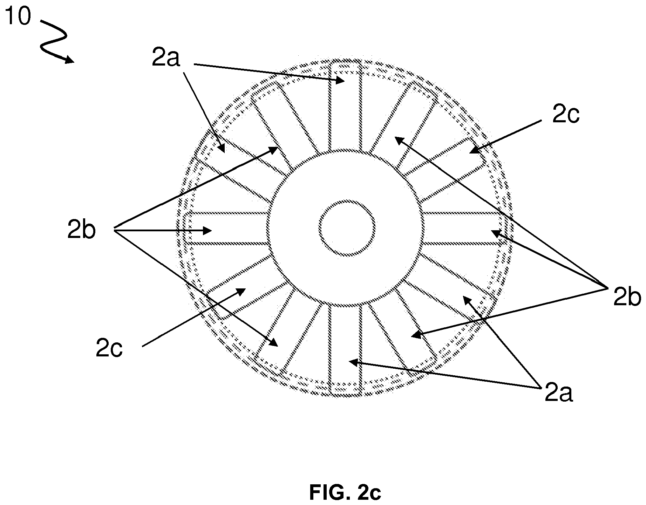

Ce nombre n de groupes de pales 2a, 2b, 2c est préférentiellement deux (cas de la **figure 2b)** ou trois (cas de la **figure 2c,** dans laquelle il y a deux longueurs de deuxième pale : les pales 2b forment un groupe de deuxièmes pales de longueur « moyenne » et les pales de 2c un groupe de deuxième pales de longueur « courte »), mais il peut être plus élevé. On note qu'en cas d'au moins trois groupes, les longueurs de pales associées à chacun des groupes sont choisies pour être régulièrement réparties entre celle de la longueur nominale (celle de la première pale 2a) et celle de la deuxième pale 2b, 2c la plus courte (dont la longueur est avantageusement entre 98.5% et 99.5% de celle de la première pale 2a).

On notant $L_{min}$ et $L_{max}$ ces longueurs, on a par

exemple $L_{i \in [\![1;n]\!]} = L_{min} + i \times \frac{L_{max} - L_{min}}{n}$, où

$L_i$ est la longueur des pales du i-ième groupe.

Tous les groupes de pales 2a, 2b, 2c peuvent comprendre autant de pales 2a, 2b, 2c (comme c'est le cas de la figure 2b, dans lequel il y a deux groupes de six pales 2a, 2b, 2c), ou des nombres de pales différents (comme c'est le cas de la figure 2c, dans lequel il y a trois groupes dont un groupe de quatre premières pales 2a, un groupe de six deuxièmes pales 2b et un groupe de deux deuxièmes pales 2c). Cela peut permettre que deux pales 2a, 2b, 2c voisines soient toujours d'un groupe *j* et d'un groupe *j*+1, $j \in [\![1; n-1]\!]$, i.e. qu'il y ait toujours un écart de longueur entre deux pales voisines, mais un écart minimal.

La répartition des groupes de pales 2a, 2b, 2c peut faire également l'objet de diverses variantes, prenant préférablement la forme d'un motif se répétant toutes les $m \in [\![n; +\infty[\![$ pales consécutives.

Dans un mode optimal, les pales 2a, 2b, 2c sont disposées autour de l'hélice amont 10 de sorte que chaque sous-ensemble de *n* pales 2a, 2b, 2c consécutives (i.e. des séquences de *n* pales) comprenne une pale 2a, 2b, 2c de chaque groupe, c'est-à-dire que l'hélice amont 10 respecte un motif d'ordre égal au nombre *n* de groupes (i.e. le motif se répète toutes les *n* pales, c'est-à-dire que *m=n*). Par exemple, la séquence des pales 2a, 2b, 2c peut suivre le motif *1, 2, ..., n, 1, 2, ..., n, 1, 2, ..., n,* etc. C'est le cas pour la figure 2b : la séquence de pale est *2a, 2b, 2a, 2b,* etc.

On note que si *n>2,* il existe potentiellement un décrochement conséquent de longueur entre les pales numéro *n* (la plus courte) et *1* (la plus longue), c'est pourquoi des séquences plus complexes (mais respectant toujours un motif d'ordre *n* (par exemple si *n=5 : 1, 3, 5, 4, 2*) sont possibles.

*Equilibrage*

De façon préférée, l'hélice amont 10 est configurée de sorte à éviter tout balourd. Dans le cas le plus simple, l'hélice amont 10 comprend $2kn, k \in \mathbb{N}^*,$ pales 2a, 2b, 2c, où *n* est toujours le nombre de groupes, chacun comprenant un nombre pair (2k) de pales (il y a alors forcément un nombre pair de pales quelle que soit la parité de *n*).

Deux pales 2a, 2b, 2c diamétralement opposées sont alors choisies sur l'hélice amont 10 de sorte à appartenir au même groupe (d'où une absence de déséquilibre malgré les longueurs variées de pales 2a, 2b, 2c).

Il est à noter que si ces *2kn* pales sont organisées en séquences de n pales comprenant une pale 2a, 2b, 2c de chaque groupe (en d'autres termes le cas particulier dans lequel le nombre de séquences est pair), alors le nombre de séquences est *2k,* et deux pales 2a, 2b, 2c diamétralement opposées appartiennent automatiquement au même groupe (et l'équilibrage est de fait réalisé).

On remarque que l'hélice 10 conforme à la figure 2c respecte ce principe de répartition, qui permet d'éviter l'utilisation de tout contrepoids.

Si l'hélice amont 10 comprend $(2k + 1)n, k \in \mathbb{N},$ pales 2a, 2b, 2c, où *n* est toujours le nombre de groupes, chacun comprenant un nombre impair (*2k+1*) de pales (ceci incluant le cas particulier d'une disposition en *2k+1* séquences de *n* pales), la configuration préférée dépend de la parité de *n,* mais au moins un contrepoids disposé de façon diamétralement opposé à une première pale 2a devient nécessaire.

Si *n* est pair, le nombre total de pales 2a, 2b, 2c reste pair, ce qui fait que chaque pale présente une pale diamétralement opposée, mais il est impossible de faire que deux pales 2a, 2b, 2c diamétralement opposées appartiennent toujours au même groupe. En d'autres termes il existe nécessairement au moins un couple de pales diamétralement opposées comprenant une première pale 2a, et une deuxième pale 2b, 2c. Cette dernière est alors si nécessaire équipée d'un contrepoids.

Si *n* est impair, le nombre total de pales 2a, 2b, 2c est impair, ce qui fait qu'il n'y a pas de pales 2a, 2b, 2c diamétralement opposée, d'où l'utilisation de contrepoids. Dans ce cas, le contrepoids sera réparti entre plusieurs aubes diamétralement opposées.

Dans un autre mode de réalisation les contrepoids peuvent être situés à d'autres endroits de la roue.

**Revendications**

1. Turbomachine (1) comprenant au moins deux hélices non carénées (10, 11) dont une hélice amont (10) et une hélice aval (11), l'hélice amont (10) comprenant une pluralité de pales (2a, 2b, 2c) dont au moins une première pale (2a) présentant un rayon de l'extrémité différent d'au moins une deuxième pale (2b, 2c).

2. Turbomachine selon la revendication 1, dans laquelle deux pales (2a, 2b, 2c) consécutives de l'hélice amont (10a) présentent des rayons de l'extrémité différents.

3. Turbomachine selon l'une des revendications 1 et 2, dans laquelle les pales (2a, 2b, 2c) de l'hélice amont (10) sont divisées en $n \in [\![2; +\infty[$ groupes de pales de rayon de l'extrémité égal, dont au moins un groupe de premières pales (2a) et au moins un groupe de deuxièmes pales (2b, 2c).

4. Turbomachine selon la revendication 3, dans laquelle tous les groupes de pales (2a, 2b, 2c) présentent des rayons de l'extrémité de pale (2a, 2b, 2c) différents.

5. Turbomachine selon l'une des revendications 3 et 4, dans laquelle tous les groupes de pales (2a, 2b, 2c) comprennent autant de pales (2a, 2b, 2c).

6. Turbomachine selon la revendication 5, dans laquelle les pales (2a, 2b, 2c) sont disposées autour de l'hélice amont (10) de sorte que chaque sous-ensemble de *n* pales (2a, 2b, 2c) consécutives comprenne une pale (2a, 2b, 2c) de chaque groupe.

7. Turbomachine selon l'une des revendications 3 à 6, dans laquelle l'hélice amont (10) comprend $2kn, k \in \mathbb{N}^*,$ pales (2a, 2b, 2c), deux pales (2a, 2b, 2c) diamétralement opposées sur l'hélice amont (10) appartenant au même groupe.

8. Turbomachine selon l'une des revendications 3 à 6, dans laquelle l'hélice amont (10) comprend

$(2k+1)n, k \in \mathbb{N},$ pales (2a, 2b, 2c), la turbomachine (1) comprenant au moins un contrepoids disposé de façon diamétralement opposé à une première pale (2a).

9. Turbomachine selon l'une des revendications 3 à 8, dans laquelle le nombre *n* de groupes de pales (2a, 2b, 2c) est deux ou trois.

10. Turbomachine selon l'une des revendications 1 à 9, dans laquelle ladite deuxième pale (2b, 2c) est une première pale (2a) tronquée.

11. Turbomachine selon l'une des revendications 1 à 10, dans laquelle ladite deuxième pale (2b, 2c) est plus courte que la première pale (2a) de 0.5% à 5%.

12. Turbomachine selon l'une des revendications 1 à 11, dans lequel l'hélice aval (11) comprend une pluralité de pales (2) présentant le rayon de l'extrémité de la première pale (2a).

13. Turbomachine selon l'une des revendications 1 à 12, dans lequel les hélices (10, 11) sont contrarotatives.

14. Turbomachine selon l'une des revendications 1 à 12, dans lequel l'hélice aval (11) est fixe.

**Patentansprüche**

1. Turbomaschine (1), umfassend mindestens zwei nicht gemantelte Propeller (10, 11), davon einen oberstromigen Propeller (10) und einen unterstromigen Propeller (11), wobei der oberstromige Propeller (10) eine Vielzahl von Schaufeln (2a, 2b, 2c) umfasst, davon mindestens eine erste Schaufel (2a), die einen Endradius aufweist, der sich von mindestens einer zweiten Schaufel (2b, 2c) unterscheidet.

2. Turbomaschine nach Anspruch 1, wobei zwei aufeinanderfolgende Schaufeln (2a, 2b, 2c) des oberstromigen Propellers (10a) unterschiedliche Endradien aufweisen.

3. Turbomaschine nach einem der Ansprüche 1 und 2, wobei die Schaufeln (2a, 2b, 2c) des oberstromigen Propellers (10) in $n \in [\![2; +\infty[\!]$ Schaufelgruppen mit gleichem Endradius unterteilt sind, davon mindestens eine Gruppe erster Schaufeln (2a) und mindestens eine Gruppe zweiter Schaufeln (2b, 2c).

4. Turbomaschine nach Anspruch 3, wobei alle Gruppen von Schaufeln (2a, 2b, 2c) unterschiedliche Endradien von Schaufeln (2a, 2b, 2c) aufweisen.

5. Turbomaschine nach einem der Ansprüche 3 und 4, wobei alle Gruppen von Schaufeln (2a, 2b, 2c) genauso viele Schaufeln (2a, 2b, 2c) umfassen.

6. Turbomaschine nach Anspruch 5, wobei die Schaufeln (2a, 2b, 2c) um den oberstromigen Propeller (10) derart angeordnet sind, dass jede Untereinheit von n aufeinanderfolgenden Schaufeln (2a, 2b, 2c) eine Schaufel (2a, 2b, 2c) jeder Gruppe umfasst.

7. Turbomaschine nach einem der Ansprüche 3 bis 6, wobei der oberstromige Propeller (10) $2kn, k \in \mathbb{N}^*,$ Schaufeln (2a, 2b, 2c) umfasst, wobei zwei diametral gegenüberliegende Schaufeln (2a, 2b, 2c) auf dem oberstromigen Propeller (10) zu derselben Gruppe gehören.

8. Turbomaschine nach einem der Ansprüche 3 bis 6, wobei der oberstromige Propeller (10) $(2k+1)n, k \in \mathbb{N},$ Schaufeln (2a, 2b, 2c) umfasst, wobei die Turbomaschine (1) mindestens ein Gegengewicht umfasst, das einer ersten Schaufel (2a) diametral gegenüber angeordnet ist.

9. Turbomaschine nach einem der Ansprüche 3 bis 8, wobei die Zahl *n* von Gruppen von Schaufeln (2a, 2b, 2c) zwei oder drei ist.

10. Turbomaschine nach einem der Ansprüche 1 bis 9, wobei die zweite Schaufel (2b, 2c) eine erste abgestumpfte Schaufel (2a) ist.

11. Turbomaschine nach einem der Ansprüche 1 bis 10, wobei die zweite Schaufel (2b, 2c) um 0,5 % bis 5 % kürzer als die erste Schaufel (2a) ist.

12. Turbomaschine nach einem der Ansprüche 1 bis 11, wobei der unterstromige Propeller (11) eine Vielzahl von Schaufeln (2) umfasst, die den Endradius der ersten Schaufel (2a) aufweisen.

13. Turbomaschine nach einem der Ansprüche 1 bis 12, wobei die Propeller (10, 11) gegenrotatorisch sind.

14. Turbomaschine nach einem der Ansprüche 1 bis 12, wobei der unterstromige Propeller (11) fest ist.

**Claims**

1. A turbomachine (1) comprising at least two unducted propellers (10, 11) including one upstream propeller (10) and one downstream propeller (11), the upstream propeller (10) comprising a plurality of blades (2a, 2b, 2c) at least one first blade (2a) of which has a tip radius different from at least one second blade (2b, 2c).

**2.** The turbomachine according to claim 1, wherein two consecutive blades (2a, 2b, 2c) of the upstream propeller (10a) have different tip radii.

**3.** The turbomachine according to one of claims 1 and 2, wherein the blades (2a, 2b, 2c) of the upstream propeller (10) are divided into $n \in [\![2; +\infty[$ groups of blades with equal tip radius, including at least one group of first blades (2a) and at least one group of second blades (2b, 2c).

**4.** The turbomachine according to claim 3, wherein all the groups of blades (2a, 2b, 2c) have different blade (2a, 2b, 2c) tip radii.

**5.** The turbomachine according to one of claims 3 and 4, wherein all the groups of blades (2a, 2b, 2c) comprise an equal number of blades (2a, 2b, 2c).

**6.** The turbomachine according to claim 5, wherein the blades (2a, 2b, 2c) are positioned around the upstream propeller (10) so that each sub-assembly of *n* consecutive blades (2a, 2b, 2c) comprises one blade (2a, 2b, 2c) from each group.

**7.** The turbomachine according to one of claims 3 to 6, wherein the upstream propeller (10) comprises $2kn, k \in \mathbb{N}^*,$ blades (2a, 2b, 2c), two diametrically opposed blades (2a, 2b, 2c) on the upstream propeller (10) belonging to the same group.

**8.** The turbomachine according to one of claims 3 to 6, wherein the upstream propeller (10) comprises $(2k+1)n, k \in \mathbb{N},$ blades (2a, 2b, 2c), the turbomachine (1) comprising at least one counterweight positioned diametrically opposite to a first blade (2a).

**9.** The turbomachine according to one of claims 3 to 8, wherein the number *n* of groups of blades (2a, 2b, 2c) is two or three.

**10.** The turbomachine according to one of claims 1 to 9, wherein said second blade (2b, 2c) is a truncated first blade (2a).

**11.** The turbomachine according to one of claims 1 to 10, wherein said second blade (2b, 2c) is shorter than the first blade (2a) by 0.5% to 5%.

**12.** The turbomachine according to one of claims 1 to 11, wherein the downstream propeller (11) comprises a plurality of blades (2) having the tip radius of the first blade (2a).

**13.** The turbomachine according to one of claims 1 to 12, wherein the propellers (10, 11) are contra-rotating.

**14.** The turbomachine according to one of claims 1 to 12, wherein the downstream propeller (11) is fixed.

FIG. 1

10

2 ←→ 2

**Art antérieur**
**FIG. 2a**

10

2a

2b

2b

2a

**FIG. 2b**

**FIG. 2c**

**FIG. 3**

**RÉFÉRENCES CITÉES DANS LA DESCRIPTION**

**Documents brevets cités dans la description**

- US 2010206982 A1
- FR 2980818
- FR 2999151